# EUROPEAN PATENT SPECIFICATION

(11) **EP 0 631 133 B1**
(45) Date of publication and mention of the grant of the patent: **17.04.2002**
(21) Application number: 94304129.3
(22) Date of filing: 08.06.1994
(51) Int. Cl.: G01N 27/447

(54) **An electrophoresis plate and a method of making an electrophoresis plate package**
Elektroforetische Platte und Verfahren zum Herstellen einer Packung dazu
Plaque électrophorétique et méthode pour fabriquer un emballage de cette plaque

(30) Priority: 21.06.1993 US 79228; 07.07.1993 US 86918
(43) Date of publication of application: 28.12.1994
(73) Proprietor: HELENA LABORATORIES CORPORATION, Beaumont Texas 77704-0752 (US)
(72) Inventor: Guadagno, Philip A., Vidor, Texas 77662 (US); Rayachoti, Rajani, Beaumont, Texas 77706 (US); Petersen, Eric H., Beaumont, Texas 77706 (US)
(74) Representative: W.P. Thompson & Co.

(56) References cited:
- EP-A- 0 246 873
- EP-A- 0 398 388
- US-A- 4 709 810
- US-A- 5 089 111

## Description

The present invention relates to an electrophoresis plate and a method of making an electrophoresis plate package. More particularly the present invention relates to an electrophoresis plate which is sealed in a container or package.

Valuable diagnostic information can be obtained by an analysis of certain biological fluids from a patient. Electrophoresis is known to be an effective technique for separating the various components of such fluids for subsequent analyses using optical densitometry techniques. The physical phenomenon underlying electrophoretic analysis is that particles which have an effective electric charge and which are deposited on a solid or semi-solid medium are caused to move with respect to the medium by an electric field applied across the medium. Particles of different types move at different rates, so a mixture of different types of particles is separated into its different components or fractions by electrophoretic analyses. These separated fractions may then be stained (visualized) by exposing the fractions to a suitable reagent so that the fractions can be optically detected using visible or ultraviolet light.

The electrophoresis process has been performed through a series of manual steps for many years. The electrophoresis medium is typically a gel substance such as agarose that has been fixed onto a suitable substrate (e.g., Mylar) to form an electrophoresis plate. The liquid sample to be examined is typically blood serum, but of course may be other liquids.

The electrophoresis process requires careful attention in order to provide accurate and reproducible results. It is therefore not surprising that techniques for performing electrophoresis automatically have been developed.

US 4709810 discloses a container for protecting and enclosing on electrophoretic support medium. The container includes a top portion and a bottom portion, which when closed sealingly engage one another.

EP-A-0246873 discloses an element for electrophoresis which comprises a plastic film, a layer for electrophoresis comprising an aqueous polyacrylamide gel, an adhesive layer containing gelatin and optionally a film-forming polymer and/or fine particles and a plastic film.

Electrophoresis plates for use with automatic equipment are typically distributed with plastic films over the working portion of the electrophoresis medium layer. The film protects the electrophoresis surface from contaminants and also prevents evaporation of water and thus helps to maintain the integrity of the electrophoresis medium layer during storage. The film must be removed by the operator before the fluid samples are deposited on the electrophoresis medium layer.

The electrophoresis plate is typically made by injecting a thermosetting gel into a mold. The gel has a liquid component which includes water, a buffer, and frequency additional substances. For example, surfactants have been included in the liquid to produce better separation of the samples and to improve resolution and stability. The protective film is applied to the electrophoresis medium layer and thereafter the electrophoresis medium layer begins to expel or express a small portion of the liquid in the gel due to a phenomenon known as syneresis. The expressed liquid accumulates between the surface of the electrophoresis medium layer and the protective film and the liquid is retained by capillary action.

When the protective film is removed so that the electrophoresis plate may be used, the accumulated liquid forms thin, irregular patches or pools on the surface of the electrophoresis medium layer. Since the liquid is electrically conductive, the irregular patches provide irregular current paths and thereby prevent the electrophoresis medium layer from being electrically homogeneous at its upper surface. For this reason it has been customary to remove the accumulated liquid by blotting the electrophoresis plate against an absorbent surface.

Removal of the accumulated liquid increases the risk that the electrophoresis medium layer might become contaminated or that the integrity and uniformity of the layer might become compromised. Contamination by lint from the absorbent surface is a particular problem, since lint may carry brighteners which fluoresce under ultraviolet light and since automatic electrophoresis equipment typically employs ultraviolet light to evaluate the separated proteins on the electrophoresis plate.

An aim of the preent invention is to provide an electrophoresis plate which reduces the risk of contaminating the electrophoresis plate.

A more particular aim is to provide an electrophoresis plate where the expressed liquid does not need to be blotted after the protective film is removed.

Another aim is to provide an electrophoresis plate which includes a surfactant in the electrophoresis medium layer to modify the surface tension of the expressed liquid with respect to the electrophoresis medium layer, so that the liquid wets the upper surface of the electrophoresis medium layer in a uniform film after removal of the protective plastic film. Because the film of liquid is uniform, the problems of an electrically non-homogeneous electrophoresis medium layer are avoided.

According to one aspect of the present invention an electrophoresis gel plate is provided, the gel plate including an electrophoresis medium layer adapted to be placed in a container of the type having first and second container portions, wherein the electrophoresis medium layer is essentially agarose, said electrophoresis medium layer including a liquid and an essentially agarose gel in which the liquid is retained; and a wetting means in the electrophoresis medium layer in an amount effective for causing the liquid expressed from the electrophoresis medium layer to form a substantially uniform layer on said electrophoresis medium layer.

According to another aspect of the present invention there is provided a method of making an electrophoresis gel plate package comprises the steps of providing a container having first and second portions; providing an electrophoresis medium layer within said container first and second portions, said electrophoresis medium layer including a liquid and an essentially agarose gel in which the liquid is retained; and providing a wetting means in the electrophoresis medium layer in an amount effective for causing the liquid expressed from the electrophoresis medium layer to form a substantially uniform layer on said electrophoresis medium layer.

Further according to the present invention an electrophoresis gel plate package comprises a container having first and second portions, an electrophoresis medium layer positioned within said container portions, said electro-. phoresis medium layer including a liquid and an essentially agarose gel in which the liquid is retained; and wetting means in the electrophoresis medium layer in an amount effective for causing the liquid expressed from the electrophoresis medium layer to form a substantially uniform liquid layer on said electrophoresis medium layer.

Finally in accordance with the invention an electrophoresis plate includes a substrate, and an electrophoresis medium layer on the substrate, the electrophoresis medium including water, a microporous gel in which the water is retained, and a surfactant. Methyl cellulose has been found to be particularly satisfactory for use in an electrophoresis plate for assaying isoenzymes of creatine kinase.

The present invention will now be further described, by way of example, with reference to the accompanying drawings:-
Figure 1 is an exploded perspective view illustrating a completed electrophoresis plate constructed according to the present invention, in a disposable clam-shell housing or package, and a removable plastic film protecting the central portion of the electrophoresis medium layer of the plate;
Figure 2 is a top plan view of an electrophoresis platform with which the electrophoresis plate of Fig. 1 can be used;
Figure 3 is a top view of the substrate of the electrophoresis plate of Fig. 1; and
Figure 4 is a perspective view illustrating an intermediate product formed by inserting the substrate into a mold and injecting a first mixture which includes a surfactant, the completed electrophoresis plate being produced from the intermediate product in a subsequent molding step.

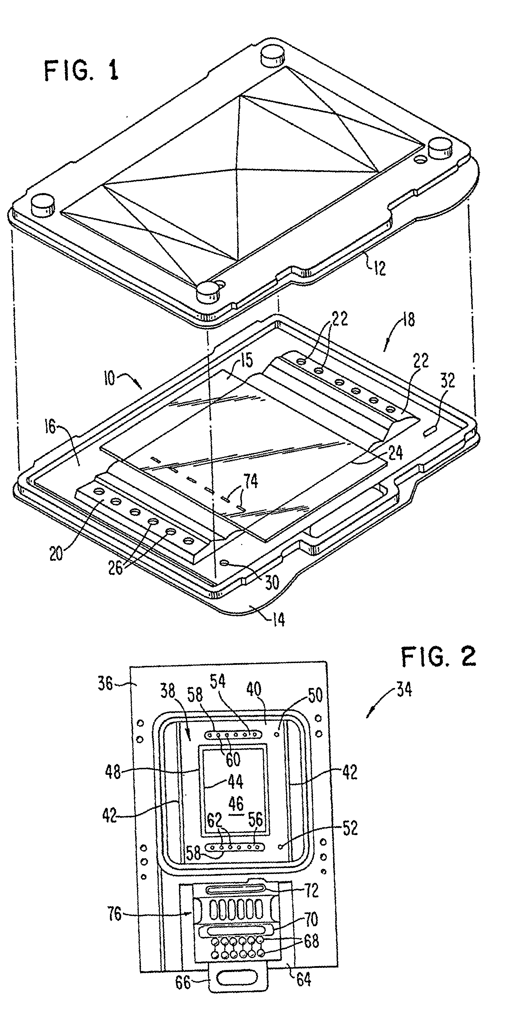

Figure 1 illustrates an electrophoresis plate 10. Plate 10 is in a disposable clam-shell package formed by a snap-together plastic container formed of two parts 12 and 14. A disposable Mylar (trademark) plastic film 15 protects the working surface of plate 10. Film 15 is about 50 microns thick and has a thin coating of agarose on its lower surface. The arrangement shown in Figure 1 is hermetically sealed in a pouch (not illustrated) for distribution to medical testing facilities.

Plate 10 includes a substrate 16 made, for example, from a thin Mylar (trademark) plastic sheet. Substrate 16 supports an electrophoresis medium layer 18 having a first end portion 20, a second end portion 22, and a central portion 24. Electrophoresis medium layer 18 is a gel which contains liquid along with a microporous support medium such as agarose for the liquid. The term "microporous" means that the electrophoresis medium has tiny pores which hold the liquid.

End portion 20 of electrophoresis medium layer 18 has six apertures 26 and end portion 22 has six apertures 28. Substrate 16 has an alignment aperture 30 and an alignment slot 32. Substrate 16 also has six apertures aligned with the apertures 26 in end portion 20 and six apertures aligned with the apertures 28 of end portion 22.

From the above description of electrophoresis plate 10 it will be apparent that the term "plate" does not imply a rigid structure; instead, the electrophoresis plate 10 is rather flexible.

Figure 2 illustrates a top view of an electrophoresis platform 34 with which plate 10 can be used. Platform 34 includes a plastic tray 36 with a recessed region 38. A ceramic plate 40 is disposed in recessed region 38 between a pair of ribs 42 protruding from tray 36. Plate 40 has a central opening 44. A heat-transfer member 46 protrudes through opening 44 and has a top surface that is coplanar with the top surface of plate 40. A thin plastic film 48 is adhesively attached to the top surface of plate 40 and covers heat transfer member 46.

Alignment pegs 50 and 52 extend from tray 36 through two apertures in plate 40. Elongated conductive members 54 and 56 are mounted on tray 36 and are visible through slots 58 in plate 40. Conductive member 54 has six electrodes 60 which extend upward through one slot 58 and conductive member 56 has six electrodes 62 which extend upward through the other slot 58.

Tray 36 also has a recessed region 64 for accommodating a removable sample tray 66. Sample tray 66 has two rows of sample wells 68, each row having six individual wells 68. Sample tray 66 also has troughs 70 and 72 for a cleaning solution and water to wash pipettes (of an applicator assembly) which transfers fluid specimens from one of the rows of wells to corresponding wells 74 formed in the central portion 24 of electrophoresis medium layer 18. A strip of absorbent paper for blotting the pipettes during the washing procedure is deposited on region 76 of sample tray 66.

Typically a reference or calibrator fluid is placed in one of the wells 68 of a row, a normal control fluid is placed in another well 68 in the row, and an abnormal control fluid is placed in a further well 68 in the row. The remaining three wells 68 in the row are filled with samples collected from a patient at three successive hourly time intervals.

To conduct an assay, electrophoresis plate 10 is removed from the container and plate 10 is placed in recessed region 38 so that the edges of substrate 16 engage ribs 42, alignment peg 52 extends through alignment aperture 30, alignment peg 50 extends through alignment slot 32, electrodes 60 extend through apertures 28, and electrodes 62 extend through apertures 26. Film 15 which has protected central portion 24 of electrophoresis medium layer 18 from contamination, is then removed. Samples are transferred from one of the rows of wells 68 to the wells 74 and electrophoresis is then conducted by supplying suitable voltages to conductive members 54 and 56.

As was noted above, an inherent property of the electrophoresis medium is that an accumulation of liquid remains on the surface of central portion 24 when the protective film 15 is removed. In prior art electrophoresis plates, this accumulated liquid forms thin, irregular patches or pools of liquid on the surface of the electrophoresis medium when film 15 is removed. The liquid contains a buffer which serves as an electrolyte. Some of the electrophoresis current flows through the liquid on the surface of a prior art electrophoresis plate, if the liquid was not removed. Since the distribution of the liquid is irregular this would cause variations in the electric field at different regions of the electrophoresis plate. This in turn would affect the accuracy of the analytical procedure because the electrophoresis plate would not be electrically homogeneous. Thus it is conventional to attempt to remove the accumulated liquid before using a prior art electrophoresis plate. However, removing the liquid by the usual expedient of blotting the electrophoresis plate increases the risk of contaminating or compromising the electrical integrity of the plate.

It is believed that the liquid from the plate forms thin pools or patches on the surface of a prior art electrophoresis plate, when film 15 is removed, due to surface forces at the interface between the electrophoresis medium and the liquid. This liquid is referred to as "expressed liquid". A difference between the surface tension of the electrophoresis medium and the expressed liquid causes the expressed liquid to contract into discrete pools upon removal of film 15 from a prior art electrophoresis plate. These pools are irregular in shape.

In accordance with the present invention, pooling of the liquid is avoided by adding a surfactant to control the surface tension of the expressed liquid with respect to the electrophoresis medium layer, so that expressed liquid is distributed on the surface of the electrophoresis medium in a uniform layer even after film 15 is removed. The uniform film of expressed liquid does not require removal since the uniform layer does not disrupt the homogeneity of the electrophoresis medium.

A specific example of the fabrication of an electrophoresis plate 10 in accordance with the present invention will now be described.

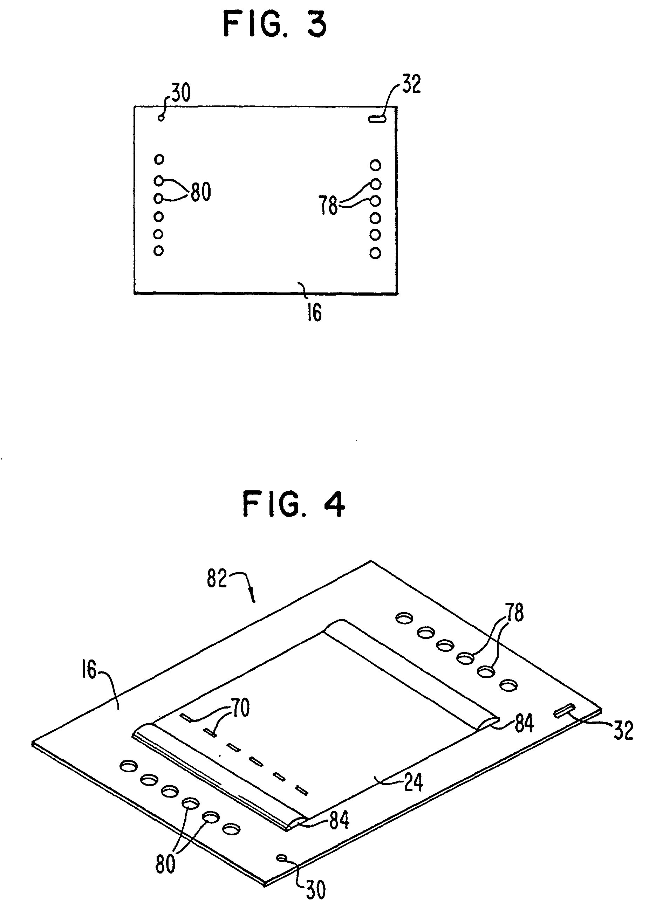

Figure 3 illustrates substrate 16, which is made of Mylar (trademark) plastic and has a gel attached to it such as a thin priming film of agarose. Alignment aperture 30, alignment slot 32, six apertures 78, and six apertures 80 are provided. The substrate 16 is placed in a mold and a first electrophoresis medium mixture is injected, thereby forming an intermediate product 82 as shown in Figure 4. Intermediate product 82 includes the central portion 24 of the electrophoresis medium layer, and end regions 84. The first electrophoresis medium mixture is a thermosetting gel having the ingredients and relative amounts specified in the following Table:

**TABLE**

| | |
|---|---|
| 100 | grams of water; |
| 1.3 | grams of agarose; |
| 0.04 | grams of sodium azide; |
| 0.36 | grams of trishydroxyaminomethane; |
| 0.42 | grams of sodium barbital; |
| 0.1 | grams of methyl cellulose, (Dow |
| | Chemical Company, "K-100LV Premium"); |
| 0.1 | grams of an anti-foaming agent (DuPont, |
| | "FG-10"); |
| 7.5 | grams of sucrose; and |
| 37 | grams of ethylene diamine tetraacetic acid, or EDTA. |

The agarose imparts the microporous structure to the electrophoresis medium. The sodium azide acts as a bacteria inhibitor. The trishydroxyaminomethane and sodium barbital together act as a buffering agent, serving as an electrolyte to make the mixture conductive and adjusting the pH of the microphoresis medium to the desired value of 8.8. The sucrose provides humectant qualities, decreasing the vapor pressure and preventing evaporation. The EDTA is present to stabilize the gel. The methyl cellulose in this mixture is a surfactant that serves to alter the surface tension of the liquid that is expressed beneath film 15 so that the expressed liquid forms a uniform layer on the electrophoresis medium when film 15 is removed.

The ingredients listed in the Table are mixed at 90° Celsius. The mixture is then cooled above its gel point and injected into a mold to form intermediate product 82.

As will be noted from the Table, in the preferred embodiment the ratio of the mass of the methyl cellulose employed to the mass of the water in the mixture is about 0.1% (^{W}/_{V}). It is believed that different ratios, such as from about 3% (^{W}/_{V}) to about 0.001% (^{W}/_{V}), would provide adequate surface active effect, depending on the surface tension of the gel. It is also believed that larger ratios could be used. What is needed is an effective amount of methyl cellulose sufficient to cause the expressed liquid under film 15 to form a uniform layer on the electrophoresis medium layer after film 15 is removed.

While methyl cellulose is the preferred surfactant, at least in an electrophoresis plate that is intended for assays of creatine kinase, other water-soluble celluloses such as ethyl cellulose and nitro cellulose can be used.

Intermediate product 82 is transformed into electrophoresis plate 10 by injection-molding a second gel mixture to form end regions 20 and 22. The second mixture need not include methyl cellulose. After the second mixture has formed a gel and electrophoresis plate 10 has been removed from the mold, the electrophoresis plate is mounted on container part 14, protective film 15 is applied to central portion 24, and container parts 12 and 14 are secured together. The assembly is then hermetically sealed in a pouch.

The provision of apertures 26, 28 in the electrophoresis medium layer 18 (and the apertures 78, 80 with substrate 16) accommodate the electrodes which extend upwardly from below the plate from the platform 34. When electrodes are positioned above the end portions 20, 22 of plate 10, the apertures 26, 28 and apertures 78, 80 are not required but may be provided depending, inter alia, on the electrode configuration. Of course, the number of apertures and the number of sample wells may be varied.

It will be understood that the above description of the present invention is susceptible to various modifications, changes, and adaptations, and the same are intended to be comprehended within the meaning and range of equivalents of the appended claims.

The features disclosed in the foregoing description in the following claims and/or in the accompanying drawings may, both separately and in any combination thereof, be material for realizing the invention in diverse forms thereof.

## Claims

1. A method of making an electrophoresis gel plate package comprising the steps of:
providing a container having first and second parts; (12, 14)
providing an electrophoresis medium layer (18) within said container first and second part, said electrophoresis medium layer including a liquid and an essentially agarose gel in which the liquid is retained; and **characterized by**
providing a wetting means in the electrophoresis medium layer in an amount effective for causing the liquid expressed from the electrophoresis medium layer to form a substantially uniform layer on said electrophoresis medium layer.

2. A method according to claim 1, wherein the wetting means is a water-soluble cellulose.

3. A method according to claim 1 or claim 2, wherein the wetting means is methyl cellulose.

4. A method according to any one of claims 1 to 3, wherein the wetting means is methyl cellulose in an amount from about 0.001 per cent to about 3.0 per cent weight by volume of the mass of the water in the electrophoresis medium layer.

5. A method according to any one of claims 1 to 4, wherein a substrate (16) is provided on one side of said electrophoresis medium layer.

6. A method according to any one of claims 1 to 5, wherein a removable plastic film (15) is provided to cover the liquid expressed from the gel of the electrophoresis medium layer.

7. An electrophoresis gel plate (10) of the type which includes an electrophoresis medium layer (18) adapted to be placed in a container of the type having first and second container parts, (12, 14) comprising:
an electrophoresis medium layer, (18) said electrophoresis medium layer including a liquid and an essentially agarose gel in which the liquid is retained; and a wetting means in the electrophoresis medium layer in an amount effective for causing the liquid expressed from the electrophoresis medium layer to form a substantially uniform layer on said electrophoresis medium layer.

8. An electrophoresis gel plate according to claim 7, wherein the wetting means is a water- soluble cellulose.

9. An electrophoresis gel plate according to claim 7 or claim 8, wherein the wetting means is methyl cellulose.

10. An electrophoresis gel plate according to any one of claims 7 to 9, wherein the wetting means is methyl cellulose in an amount from about 0.001 per cent to about 3.0 per cent weight by volume of the mass of the water in the electrophoresis medium layer.

11. An electrophoresis gel plate according to any one of claims 7 to 10, wherein a substrate (16) is provided on one side of said electrophoresis medium layer.

12. An electrophoresis gel plate according to any one of claims 7 to 11 wherein a removable plastic film (15) is provided to cover the liquid expressed from the gel of the electrophoresis medium layer.

13. An electrophoresis gel plate package comprising:
a container having first and second parts (12, 14); and
an electrophoresis gel plate according to any one of claims 7 to 11 positioned within said container parts.

## Patentansprüche

1. Verfahren zur Herstellung einer Elektrophorese-Gelplattenpackung, das die folgenden Schritte umfasst:
Vorsehen eines Behälters mit ersten und zweiten Teilen (12, 14);
Vorsehen einer Elektrophorese-Mediumschicht (18) in dem ersten und zweiten Teil des genannten Behälters, wobei genannte Elektrophorese-Mediumschicht eine Flüssigkeit und ein erforderliches Agarosegel einschließt, worin die Flüssigkeit zurückgehalten wird; und **gekennzeichnet durch**:
Vorsehen eines Benetzungsmittels in der Elektrophorese-Mediumschicht in einer Menge, die zum Veranlassen der aus der Elektrophorese- Mediumschicht exprimierten Flüssigkeit wirksam ist, eine im Wesentlichen gleichmäßige Schicht auf genannter Elektrophorese-Mediumschicht zu bilden.

2. Verfahren nach Anspruch 1, worin das Benetzungsmittel eine wasserlösliche Cellulose ist.

3. Verfahren nach Anspruch 1 oder 2, worin das Benetzungsmittel Methylcellulose ist.

4. Verfahren nach einem der Ansprüche 1 bis 3, worin das Benetzungsmittel Methylcellulose in einer Menge von ca. 0,001 % (Gew./Vol.) bis ca. 3,0 % (Gew./Vol.) der Masse des Wassers in der Elektrophorese-Mediumschicht ist.

5. Verfahren nach einem der Ansprüche 1 bis 4, worin ein Substrat (16) auf einer Seite von genannter Elektrophorese-Mediumschicht vorgesehen ist.

6. Verfahren nach einem der Ansprüche 1 bis 5, worin eine entfernbare Kunststofffolie (15) zum Abdecken der aus dem Gel der Elektrophorese-Mediumschicht exprimierten Flüssigkeit vorgesehen ist.

7. Elektrophorese-Gelplatte (10) des Typs, der eine Elektrophorese-Mediumschicht (18) einschließt, die angepasst ist, um in einen Behälter des Typs gegeben werden zu können, der erste und zweite Behälterteile (12, 14) aufweist, der Folgendes umfasst:
Eine Elektrophorese-Mediumschicht (18), wobei genannte Elektrophorese-Mediumschicht eine Flüssigkeit und ein erforderliches Agarosegel einschließt, worin die Flüssigkeit zurückgehalten wird; und ein Benetzungsmittel in der Elektrophorese-Mediumschicht in einer Menge, die zum Veranlassen der aus der Elektrophorese-Mediumschicht exprimierten Flüssigkeit wirksam ist, eine im Wesentlichen gleichmäßige Schicht auf genannter Elektrophorese-Mediumschicht zu bilden.

8. Elektrophorese-Gelplatte nach Anspruch 7, worin das Benetzungsmittel eine wasserlösliche Cellulose ist.

9. Elektrophorese-Gelplatte nach Anspruch 7 oder 8, worin das Benetzungsmittel Methylcellulose ist.

10. Elektrophorese-Gelplatte nach einem der Ansprüche 7 bis 9, worin das Benetzungsmittel Methylcellulose in einer Menge von ca. 0,001 % (Gew./Vol.) bis ca. 3,0 % (Gew./Vol.) der Masse des Wassers in der Elektrophorese-Mediumschicht ist.

11. Elektrophorese-Gelplatte nach einem der Ansprüche 7 bis 10, worin ein Substrat (16) auf einer Seite von genannter Elektrophorese-Mediumschicht vorgesehen ist.

12. Elektrophorese-Gelplatte nach einem der Ansprüche 7 bis 11, worin eine entfernbare Kunststofffolie (15) zum Abdecken der aus dem Gel der Elektrophorese-Mediumschicht exprimierten Flüssigkeit vorgesehen ist.

13. Elektrophorese-Gelplattenpackung, die Folgendes umfasst:
Einen Behälter mit ersten und zweiten Teilen (12, 14); und
eine Elektrophorese-Gelplatte nach einem der Ansprüche 7 bis 11, die in genannten Behälterteilen positioniert ist.

## Revendications

1. Méthode pour fabriquer un ensemble de conditionnement pour plaque de gel d'électrophorèse comprenant les étapes consistant à:
fournir un récipient ayant des première et deuxième parties; (12, 14)
fournir une couche de milieu d'électrophorèse (18) dans ladite première et deuxième partie du récipient, ladite couche de milieu d'électrophorèse incluant un liquide et un gel essentiellement d'agarose dans lequel le liquide est retenu; et
**caractérisée par**
la fourniture d'un moyen mouillant dans la couche de milieu d'électrophorèse en une quantité efficace pour faire que le liquide exprimé de la couche de milieu d'électrophorèse forme une couche sensiblement uniforme sur ladite couche de milieu d'électrophorèse.

2. Méthode selon la revendication 1, dans laquelle le moyen mouillant est une cellulose soluble dans l'eau.

3. Méthode selon la revendication 1 ou la revendication 2, dans laquelle le moyen mouillant est de la méthylcellulose.

4. Méthode selon l'une quelconque des revendications 1 à 3, dans laquelle le moyen mouillant est de la méthylcellulose en une quantité d'environ 0,001 pour cent à environ 3,0 pour cent de poids en volume de la masse de l'eau dans la couche du milieu d'électrophorèse.

5. Méthode selon l'une quelconque des revendications 1 à 4, dans laquelle un substrat (16) est fourni d'un côté de ladite couche de milieu d'électrophorèse.

6. Méthode selon l'une quelconque des revendications 1 à 5, dans laquelle une pellicule en plastique détachable (15) est fournie pour couvrir le liquide exprimé du gel de la couche de milieu d'électrophorèse.

7. Plaque de gel d'électrophorèse (10) du type qui inclut une couche de milieu d'électrophorèse (18) adaptée pour être placée dans un récipient du type ayant des première et deuxième parties de récipient, (12, 14) comprenant:
une couche de milieu d'électrophorèse, (18) ladite couche de milieu d'électrophorèse incluant un liquide et un gel essentiellement d'agarose dans lequel le liquide est retenu; et un moyen mouillant dans la couche de milieu d'électrophorèse en une quantité efficace pour faire que le liquide exprimé de la couche de milieu d'électrophorèse forme une couche sensiblement uniforme sur ladite couche de milieu d'électrophorèse.

8. Plaque de gel d'électrophorèse selon la revendication 7, dans laquelle le moyen mouillant est une cellulose soluble dans l'eau.

9. Plaque de gel d'électrophorèse selon la revendication 7 ou la revendication 8, dans laquelle le moyen mouillant est de la méthylcellulose.

10. Plaque de gel d'électrophorèse selon l'une quelconque des revendications 7 à 9, dans laquelle le moyen mouillant est de la méthylcellulose en une quantité d'environ 0,001 pour cent à environ 3,0 pour cent de poids en volume de la masse de l'eau dans la couche de milieu d'électrophorèse.

11. Plaque de gel d'électrophorèse selon l'une quelconque des revendications 7 à 10, dans laquelle un substrat (16) est fourni d'un côté de ladite couche de milieu d'électrophorèse.

12. Plaque de gel d'électrophorèse selon l'une quelconque des revendications 7 à 11 dans laquelle une pellicule en plastique détachable (15) est fournie pour couvrir le liquide exprimé du gel de la couche de milieu d'électrophorèse.

13. Ensemble de conditionnement pour plaque de gel d'électrophorèse comprenant:
un récipient ayant des première et deuxième parties (12, 14); et
une plaque de gel d'électrophorèse selon l'une quelconque des revendications 7 à 11 positionnée dans lesdites parties du récipient.
